Europäisches Patentamt

European Patent Office

Office européen des brevets

(11) Publication number: **0 263 893**
**A1**

# EUROPEAN PATENT APPLICATION

(21) Application number: 86114333.7

(51) Int. Cl.⁴: **F01N 3/28**

(22) Date of filing: 16.10.86

(43) Date of publication of application:
20.04.88 Bulletin 88/16

(84) Designated Contracting States:
AT BE CH DE ES FR GB GR IT LI LU NL SE

(71) Applicant: **W.R. GRACE & CO.**
**Grace Plaza 1114 Avenue of the Americas**
**New York New York 10036(US)**

(72) Inventor: **Cornelison, Richard C.**
**11856 Kenyon Drive**
**Hiram Ohio 44234(US)**

(74) Representative: **UEXKÜLL & STOLBERG**
**Patentanwälte**
**Beselerstrasse 4**
**D-2000 Hamburg 52(DE)**

(54) Housing for catalytic converter elements and catalytic converter.

(57) There is provided an improved housing (10) for catalyst support, e.g., a catalytic converter for automotive vehicles, characterized by a tubular shell (12), and an end cap (14) having an exhaust pipe engaging sleeve (26) at its distal extremity and a larger diameter shell (28) engaging end at its proximal extremity, and an intermediate sloped neck portion (30), the included angle (A) between the sloped surface (30) and a plane (32) perpendicular to the axis of the end cap (14) and intersecting the sloped surface (30) being less than 45°. Also provided is a catalytic converter for automotive vehicles including within the housing a spirally wound or an accordion folded thin metal catalyst body (20).

FIG. I

## HOUSING FOR CATALYTIC CONVERTER ELEMENTS AND CATALYTIC CONVERTER

This invention relates to a housing for a catalytic medium supported on a metal foil and a catalytic converter containing such supported catalytic medium. More particularly, the invention relates to catalytic converters especially useful for internal combustion engines whether spark ignited or compression ignited and especially for automotive vehicles.

### BACKGROUND OF THE INVENTION

In the early 1970's it was determined that a major source of pollution in the atmosphere came from the exhaust gas of automotive vehicles. The principal offenders were found to be hydrocarbons (unburned fuel), carbon monoxide, and nitrogen oxides. The mechanical design of catalytic converters in use today on automotive vehicles are quite similar in construction to those developed in the early years of vehicular exhaust gas treatment. In general, they comprise a ceramic catalyst support comprised of a cast ceramic block having a plurality of straight elongated openings, or cells extending therethrough. A catalytically active material was then deposited on the interior surface of these openings, the catalyst usually being platinum or palladium carried on aluminum oxide or other suitable carrier material.

The blocks containing the catalyst were then disposed in a steel "clam shell" shaped to contain the ceramic blocks or block. The ceramic blocks were generally of an oval shape having a major axis of approximately 5 to 7 inches and a minor axis of approximately 3 to 4 inches. The "clam shell" housing was a two-piece member adapted and configured to contain one or more of the catalyst blocks. The two pieces were provided with outwardly extending flanges to enable welding of the two pieces together after the blocks had been positioned within one of the clam shell halves and the other superimposed thereon. The ends of the unit were provided with end caps which were necked down to a circular sleeve adapted to accommodate the exhaust pipe O.D. These devices were then inserted in place of a removed segment of the exhaust pipe and either welded or otherwise secured thereto. These catalytic converters operate at very high temperatures usually in the range of 1200° to 1800°F. One of the early problems was the provision of adequate ground shielding at clearance because of the tendency of the devices to ignite dry grass coming in contact therewith.

The present invention relates in particular to a housing for a catalytic support, i.e., one that is carried by a thin corrugated metal foil .0015" to .0030" thick in the form of a honeycomb. Reference may be had to the patents to Retallick 4,301,039, Retallick et al 4,350,617 and Retallick 4,402,871 for disclosure of corrugated metallic foil catalyst supports and catalysts (e.g., platinum/$Al_2O_3$ and palladium/$Al_2O_3$) of the type which may be used within the housings of the present invention. These patents are incorporated herein by reference. Reference may also be had to U. S. Patents 4,300,956 and 4,318,888 for a suitable honeycomb catalyst support structure and catalyst support foil. These patents are also incorporated herein by reference.

### BRIEF DESCRIPTION OF THE INVENTION

Briefly stated, the present invention is in a housing for a catalyst support structure. The housing comprises an elongated tubular shell having a generally rounded cross-section in contrast to the "clam shell" type housing currently in use. The tubular shell is provided with an end cap also having a generally rounded cross-section along its axial length. The end cap is provided with a circular sleeve portion at its distal extremity of smaller diameter than the dimension of the proximal extremity. The small diameter is a sleeve which is adapted to connect to the exhaust pipe of an automotive vehicle, for example. The dimensioning at the proximal extremity of the device is adapted for sealing engagement with one end of the tubular shell. The end cap is provided with an intermediate sloped neck portion of generally rounded cross section. It is critical to the present invention that the included base angle between an element lying on the sloped surface and in a plane including the longitudinal axis and a plane perpendicular to the longitudinal axis of the end cap is less than 45° about the sloped surface. Thus, the cross section of the device may be oval or circular. For purposes of this disclosure, the invention will be described using a circular cross section, it being understood the invention also contemplates an oval cross section having major and minor axes.

In preferred embodiments of the present invention, the proximal extremity of the end cap is provided with a radially outwardly extending lip dimensioned for sealing engagement with the internal diameter of the tubular shell.

## BRIEF DESCRIPTION OF THE DRAWINGS

The invention may be better understood by having reference to the annexed drawings wherein there is shown a preferred embodiment of the invention and wherein:

Figure 1 is an elevation of a catalytic converter housing containing a supported catalyst member in a partially cut away elevational view.

Figure 2 is an end view of the housing shown in Figure 1.

Figure 3 is a side elevation of another form of end cap.

## DETAILED DESCRIPTION OF THE INVENTION

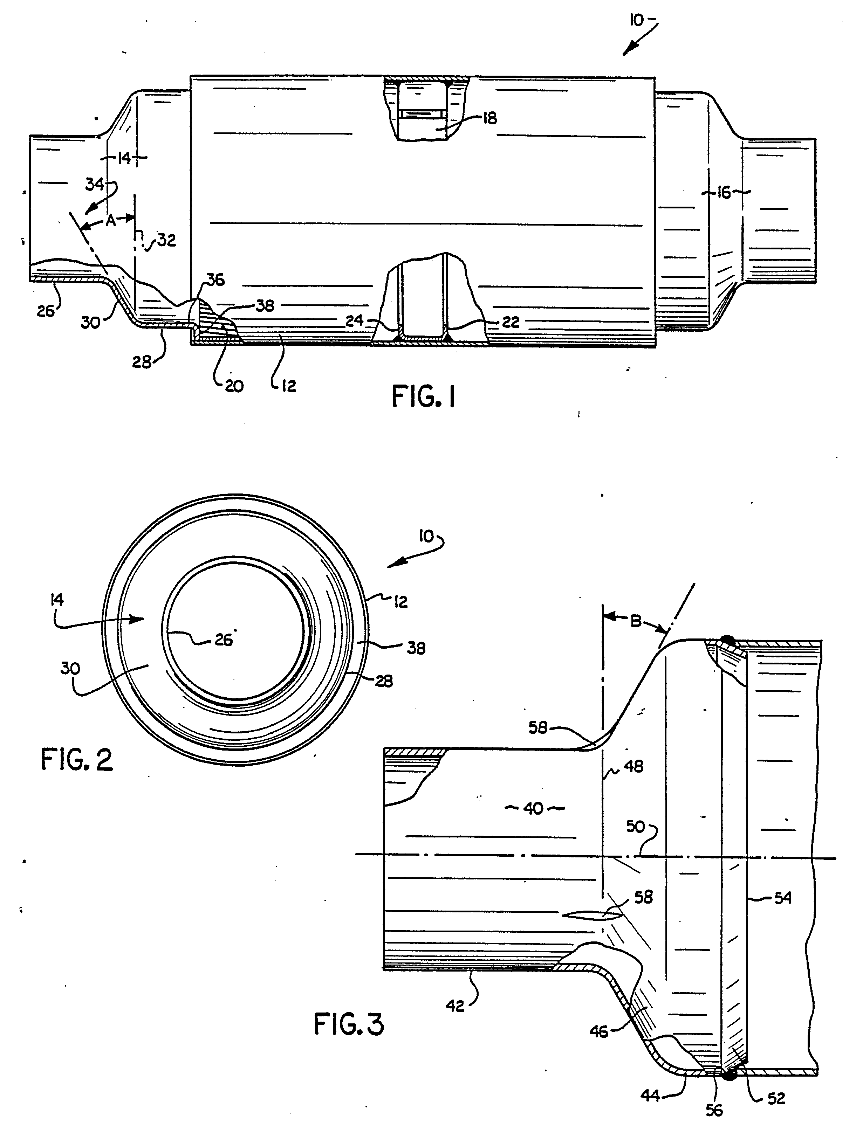

Referring more particularly to the drawings, there is shown in Figure 1 in partial cut away elevational view, a catalytic converter housing 10 having a central portion 12 of preferably circular cross-section and a pair of similarly shaped end caps 14 and 16 secured as by welding to each end of the tubular member 12. The tubular member 12 may have any convenient axial length, for example, 3.75" to 12.0". The dimensions may vary from those exemplified. The tubular section 12 may contain one or more catalyst support elements. In the embodiment shown in Figure 1, there is provided a divider 18 which is a circular spacer ring adapted to space separate catalytic elements from one another and also, if desired, to allow for the introduction of air to mingle with gases which have passed through one of the catalytic converter elements 20 prior to entry into the second catalytic converter element (not shown) to promote combustion of any unburned hydrocarbons. The spacer ring 18 in the preferred embodiment shown is located centrally of the tubular shell 12 and is about 3/4 of an inch in axial length and may be captured or welded between adjacent catalytic elements 20. Where a plurality of catalytic elements, e.g., element 20, is used, different catalyst may be carried on each element, e.g., platinum/rhodium on one and platinum/palladium on the adjacent one. The spacer is desirably provided with marginal flanges 22 and 24 which are adapted to abut against the catalyst support elements and in combination with the end caps later described to prevent axial movement of the catalyst support elements.

Also shown in partially cut away view in Figure 1 is an end cap 14. The end cap 14 is provided with a sleeve portion 26, a second sleeve portion of larger diameter than sleeve portion 26, and an intermediate sloped portion, e.g., a frustoconical portion 30, joining sleeve portions 26 and 28. The included angle A formed between a base plane 32 perpendicular to the central axis 34 of the structure 10 and the conical surface 30 must be less than 45°. It has been found that if the angel A is 45° or greater infrared radiation of the heat generated within the catalytic core is reflected internally and not transmitted through the frontal inclined wall 30 of the end cap. If, on the other hand, the angle is less than 45°, for example, 30°, infrared heat generated within the catalytic converter is transmitted through the side wall of the end cap and dissipated in the ambient air. Because of the tremendous heat generated within these converters, utilization of every available means for dissipating the heat is a desired objective. The angle A may therefore range from less than 45° all the way to 0°. However, for ease of manufacture and considering aerodynamics of the device an angle A of 30° is convenient.

The proximal end 36 is provided with a radially outwardly extending lip 38 which is dimensioned and configured for sealing coaction with the inner diameter of the tubular member 12. A convenient mode of attachment is by welding. The radially outwardly extending lip 38 is adapted to abut against the catalytic member 20 to prevent axial displacement thereof.

The sleeve portion 26 conveniently ranges in length from 1/2 of an inch to about 1 inch and has an internal diameter which ranges from about 1.25 inches to about 2.5 inches depending upon the diameter of the exhaust pipe. The overall length of the unit shown in Figure 1 conveniently ranges from about 18 inches to about 8.5 inches. The outer diameter of the tubular member 12 is conveniently about 2-3/4 to 6 or more inches. The diameter and length of the tubular portion 12 may, of course, be adjusted in order to accommodate the needs of a particular automotive vehicle manufacturer in terms of ground clearance and gas retention time in contact with the catalyst. A second end cap 16 of the like configuration is also provided.

In Figure 3 there is shown another form of end cap useful in forming the housings of the present invention.

In the embodiment shown in Figure 3, the end cap 40 is provided with a sleeve portion 42 which is adapted in the same manner to coact with an open end of the exhaust pipe of an automotive vehicle. There is also provided a second sleeve portion 44 of larger diameter then the sleeve portion 42. The portions 42 and 44 are joined by an intermediate portion 46 which is also in the shape of a frustoconical member. The included angle B between a plane 48 normal to the central axis 50 of the end cap 40 and an element lying on the conical surface in a plane including the longitudinal axis has exactly the same characteristics as those described with respect to the portion 30 in Figure 1. In the example shown in Figure 3, the angle B is 30°.

Instead of a lip 38 (Figure 1), the end cap of the embodiment of Figure 3 is an inwardly directed frustoconical surface 52 which is adapted to fit within the tubular shell 12 shown in Figure 1, the slope of the frustoconical surface 52 being sufficient to provide a projection within the I.D. of the tube 12 of approximately 1/4 of an inch. The purpose of this radially inwardly projecting edge 54 is again to restrain the catalytic core 20 from the axial movement within the shell 12. The end cap 40 is conveniently secured to the shell 12 by welding between the outer extremity of the shell 12 and the larger diameter 56 of the frustoconical portion 52.

In the example shown in Figure 3, a convenient inner diameter 54 is about 3.525". The outer diameter of the frustoconical portion 52 at 56 is conveniently about 3.89". The height of the frustoconical portion 52 in the embodiment shown is conveniently .25 to .28".

It may be found convenient with the end caps of the present invention to provide fillets 58 between the smaller diameter sleeve portion 42 and the frustoconical portion 46 to improve the strength of the end cap in an axial direction.

The housings of the present invention are conveniently formed of an aluminized steel 0.062 inch thick. Alternatively, a 409 stainless steel of the same thickness may be used. The end caps 14, 16 and that shown in Figure 3 are formed by any convenient means, e.g., spinning and shaping to a mandrel, or drawing.

The devices of the present invention may be jacketed by wrapping a metal sheet or outer jacket about the housing in spaced relation thereto by interposing suitable spacers secured to the housing 10 and to the jacket (not shown), respectively. This jacket may be used, for example to preheat carburetor inlet air.

The catalytic housings of the present invention are characterized by lower cost, ease of assembly, the requirement for fewer tools and fixtures to manufacture, less loss of scrap metal, high strength and a reduction in the number of parts. For example, where a ceramic catalyst support is used, it is common practice to wrap the catalyst support in stainless gauze to provide a shock absorber to prevent damage to the rather fragile ceramic member. Moreover, the devices of this invention provide the advantage of a single point of manufacture. In the case of ceramic devices, these are manufactured at one place and shipped to a second for assembly into the catalytic converter shell. When the catalytic support unit 20 contained within housing is formed of an aluminum coated stainless steel foil having a catalytic material carried on the surface thereof as disclosed in the aforementioned patents to Retallick, the resulting device possesses extreme strength and is not subject to damage by rough handling as in the case of ceramic devices. Moreover, there is no tendency for axial movement of the catalytic units.

**Claims**

1. A housing for a catalyst support comprising a tubular shell and an end cap, said end cap having a circular sleeve portion at its distal extremity, the geometric configuration at the proximal extremity being adapted for sealing engagement with one end of said tubular shell, said end cap having an intermediate sloped neck portion, the included angle between the sloped surface and a plane perpendicular to the axis of the end cap and intersecting said sloped surface being less then 45°.

2. A housing as defined in Claim 1 wherein the tubular shell has a circular cross section.

3. A housing as defined in Claim 1 wherein the proximal extremity of said end cap is provided with a radially outwardly extending lip dimensioned for sealing engagement with the internal diameter of said tubular shell.

4. A housing as defined in Claim 1 wherein the tubular shell has identical end caps as defined in Claim 1 at such extremity.

5. A housing as defined in Claim 4 wherein similarly configured end caps are welded to the respective extremities of the elongated tubular shell.

6. A housing as defined in Claim 1 wherein the intermediate sloped surface is frusto conical.

7. A housing as defined in Claim 1 including within said tubular shell a catalyst support spacer intermediate the ends of said shell, said spacer being a ring adapted to coact with separate catalyst support structures to retain such catalyst support structures in fixed spaced axial relation.

8. A housing as defined in Claim 7 wherein the spacer is secured to the inner surface of said tubular shell.

9. A housing as defined in Claim 7 wherein the spacer is provided with a pair of axially spaced radially inwardly directed annular flanges adapated to engage the confronting ends of axially displaced catalyst support structures.

10. A catalytic converter for an automotive vehicle comprising (a) a housing comprising a tubular shell and an end cap, said end cap having a circular sleeve portion at its distal extremity, the geometric configuration at the proximal extremity being adapted for sealing engagement with one end of said tubular shell, said end cap having an intermediate sloped neck portions, the included angle between the sloped surface and a plane perpendicular to the axis of the end cap and intersecting said sloped surface being less then 45°, and (b) a catalyst carrying metal foil catalyst support member disposed within said housing.

11. A catalytic converter as defined in Claim 10 wherein the sloped neck portion of the end cap is frustoconical.

FIG. I

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 412 343 (TENNECO)<br><br>* Page 3, line 20 - page 4, line 7; figure 2 * | 1,2,4-11 | F 01 N 3/28 |
| Y | | 3 | |
| Y | FR-A-2 273 943 (ENGELHARD)<br>* Page 11, lines 8-16; figure 3 * | 3 | |
| A | US-A-4 335 078 (USHIJIMA)<br>* Column 5, lines 44-56; figure 2 * | 1,10 | |
| A | US-A-4 581 206 (OTANI)<br>* Column 3, lines 44-50; figure 5 * | 7-9 | TECHNICAL FIELDS SEARCHED (Int. Cl.4)<br><br>F 01 N |

The present search report has been drawn up for all claims

| Place of search | Date of completion of the search | Examiner |
|---|---|---|
| THE HAGUE | 12-06-1987 | HAKHVERDI M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82